# EUROPÄISCHE PATENTSCHRIFT

(11) **EP 2 429 969 B1**
(45) Veröffentlichungstag und Bekanntmachung des Hinweises auf die Patenterteilung: **12.12.2018**
(21) Anmeldenummer: 10710797.1
(22) Anmeldetag: 15.03.2010
(51) Int. Cl.: C04B 20/10, C04B 28/02, C04B 40/00

(54) **NEUE PIGMENTSYSTEME ZUR EINFÄRBUNG VON ZEMENTÄREN SYSTEMEN, INSBESONDERE BETON**
NEW PIGMENT SYSTEM FOR COLORING CEMENT SYSTEMS, IN PARTICULAR CONCRETE
NOUVEAUX SYSTÈMES DE PIGMENT DESTINÉS À COLORER DES SYSTÈMES À BASE DE CIMENT, NOTAMMENT DU BÉTON

(30) Priorität: 12.05.2009 DE 102009020956; 04.01.2010 DE 102010003999
(43) Veröffentlichungstag der Anmeldung: 21.03.2012
(73) Patentinhaber: Harold Scholz&Co. GmbH, 45665 Recklinghausen (DE)
(72) Erfinder: WEBER, Peter, 55597 Wöllstein (DE); MATIJASIC, Zlatko, 51469 Bergisch Gladbach (DE); GADO, Klaus-Dieter, 97846 Partenstein (DE); SIEBLIST, Christian, 97846 Partenstein (DE)
(74) Vertreter: Von Rohr Patentanwälte Partnerschaft mbB
(86) Internationale Anmeldenummer: PCT/EP2010/001626
(87) Internationale Veröffentlichungsnummer: WO 2010/130314

(56) Entgegenhaltungen:
- EP-A1- 1 609 825
- EP-A1- 1 972 601
- EP-A2- 0 373 426
- WO-A1-94/18137
- JP-A- 2001 151 512
- US-A1- 2003 047 118
- US-A1- 2004 040 469
- US-A1- 2004 231 567
- DATABASE WPI Week 200046 Thomson Scientific, London, GB; AN 2000-507952 XP002590799 & JP 2000 169780 A (MINOLTA CAMERA KK) 20. Juni 2000 (2000-06-20)

## Beschreibung

Die vorliegende Erfindung betrifft das Gebiet der hydraulischen Bindemittelsysteme, d. h. der zementären Systeme bzw. Beton.

Insbesondere betrifft die vorliegende Erfindung eine Präparation zur Einfärbung von hydraulischen Bindemittelsystemen, wobei es sich bei der Präparation um ein Mehrkomponentensystem handelt.

Die vorliegende Erfindung betrifft ferner ein Verfahren zur Herstellung der Präparation zum Einfärben der hydraulischen Bindemittelsysteme sowie die Verwendung der erfindungsgemäßen Präparation zur Einfärbung von hydraulischen Bindemittelsystemen.

Insbesondere betrifft die vorliegende Erfindung ferner ein Verfahren zum Einfärben von hydraulischen Bindemittelsystemen unter Verwendung der erfindungsgemäßen Präparation.

Die vorliegende Erfindung betrifft schließlich eingefärbte Bauteile oder Formkörper, die mit der erfindungsgemäßen Präparation erhältlich sind.

Mit dem Aufkommen von Sichtbeton in der modernen Architektur ist der Bedarf an farblich modifiziertem Beton enorm gestiegen. Planer und Architekten nutzen diesen Baustoff immer häufiger als gestalterisches Mittel, denn er kann durch ein natürliches Aussehen beeindrucken.

Der Einfärbung von Sichtbeton sind jedoch enge Grenzen gesetzt. So können keine Einbußen in der Festigkeit des Betons akzeptiert werden. Zudem muss der Beton auch unter strengen Witterungsbedingungen beständig gefärbt bleiben. Bezüglich weiterer Anforderungen an eingefärbte hydraulische Bindemittelsysteme wird ferner auf folgende Veröffentlichungen verwiesen: Weber, P., Farbe in bewehrtem Beton, Beton- und Stahlbetonbau 99 (2004), Verlag Ernst und Sohn, Heft 11; Weber, P., Gestalten mit farbigem Sichtbeton - Planung und Herstellung, Beton 5 (2007), Verlag Bau + Technik, Düsseldorf; Weber, P., Herstellung von farbigem Beton - Optimiertes Einfärben von Beton, Beton- und Fertigteiltechnik 7 (2007); Büchner G. und Weber, P., Bayferrox® 360: Ein neues Prämium-Eisenoxidschwarzpigment stellt sich vor, Betonwerk + Fertigteiltechnik 7 (2005).

Die bevorzugte Farbe beim Einfärben von Beton ist Schwarz. Im Stand der Technik ist bekannt, dass drei Pigmenttypen zur Einfärbung in den Farbtönen Anthrazit oder Schwarz zur Verfügung stehen. Dies sind Eisenoxidschwarz (Fe₃O₄), Kohlenstoff (C) und ein Kupferspinell (Cu(Cr,Fe)₂O₄). Der Kupferspinell besitzt eine geringere Farbkraft als Eisenoxid und Kohlenstoff und ist zudem wesentlich teurer. Daher kommen in der Praxis bislang ausschließlich die beiden anderen Pigmenttypen zum Einsatz.

Die Verwendung von Eisenoxidschwarz und Kohlenstoff ist jedoch mit Nachteilen behaftet. So ist eine in der Anwendung bevorzugte Tiefschwarzeinfärbung mit Eisenoxidschwarz nicht möglich. Die maximale Einfärbung bei Verwendung von Eisenoxidschwarz stellt Anthrazit dar. Kohlenstoff ist mit dem Nachteil behaftet, daß die dauerhafte Einbindung des relativ unpolaren Kohlenstoffs in ein polares, wässriges zementäres System nur unzureichend möglich ist. Andererseits besteht der Vorteil von Eisenoxidschwarz darin, daß eine einwandfreie und dauerhafte Einbindung in ein zementäres System möglich ist. Kohlenstoff hat den Vorteil, dass ein tiefschwarzes zementäres System bereitgestellt werden kann.

Mit der Entwicklung spezieller Eisenoxidschwarz-Pigmente wurde die Möglichkeit geschaffen, Beton mittels Eisenoxidschwarz-Pigmenten verhältnismäßig dunkel zu gestalten. Dies ist jedoch mit einem hohen Kostenaufwand verbunden, da eine hohe Pigmentdosis bei einem verhältnismäßig hohen Grundpreis des Pigments erforderlich ist.

Somit bieten in der Praxis Kohlenstoff-Pigmente im Grunde genommen die einzige Möglichkeit, Beton tiefschwarz einzufärben, wie von Weber, P., Zeitschrift Betonwerk und Fertigungsteiltechnik (BFT) 7 (2005), Seiten 4 ff. und 7 (2008), Seiten 20 ff. beschrieben.

Im Stand der Technik sind zementäre Systeme beschrieben, die mit Pigmenten eingefärbt werden. So offenbart beispielsweise die DE 195 33 081 C1 ein Verfahren zur Herstellung von farbigen Betonkörpern, wonach der Rohbetonmischung eine zementverträgliche wässrige Polymerdispersion zugesetzt wird. Ein solches Verfahren ermöglicht jedoch keine gezielte Modifizierung der Pigmentpartikel, um beliebige Pigmente für die Einfärbung von Beton einsetzen zu können.

Die JP 2001-151512 A betrifft ein Schwarzpigment zur Einfärbung von Beton, wobei das Schwarzpigment aus einem Kern aus Eisenoxid mit einer daran angelagerten Organosiliciumverbindung, auf welcher wiederum Ruß abgeschieden ist, besteht und somit eine Kern/Hülle-Struktur aufweist, an deren Oberfläche Rußpartikel aufgebracht sind.

Ausgehend vom Stand der Technik lag der Erfindung allgemein die Aufgabe zugrunde, die zuvor geschilderten Nachteile im Stand der Technik zu überwinden.

Insbesondere lag der Erfindung die Aufgabe zugrunde, eine Zusammensetzung bzw. Präparation bereitzustellen, mit der hydraulische Bindemittelsysteme, d. h. insbesondere zementäre Systeme bzw. Beton, beständig eingefärbt, besonders bevorzugt tiefschwarz gefärbt werden können. Die Zusammensetzung sollte sich nicht nachteilig auf die Festigkeit des herzustellenden hydraulischen Bindemittelsystems auswirken und ferner kostengünstig sein.

Die Anmelderin hat überraschenderweise herausgefunden, dass die der Erfindung zugrundeliegende Aufgabe durch eine Präparation zur Einfärbung von hydraulischen Bindemittelsystemen, insbesondere zementären Systemen, vorzugsweise Beton, gelöst werden kann, indem eine betreffende Präparation bereitgestellt wird, wobei die Präparation (a) mindestens ein oberflächenmodifiziertes Farbstoffpigment und (b) mindestens ein Dispergiermittel sowie gegebenenfalls (c) mindestens einen Phasenvermittler umfasst.

Gegenstand der vorliegenden Erfindung ist somit eine Präparation zur Einfärbung von hydraulischen Bindemittelsystemen gemäß Anspruch 1. Weitere, insbesondere vorteilhafte Ausgestaltungen dieses Erfindungsaspektes sind Gegenstand der diesbezüglichen Unteransprüche.

Weiterer Gegenstand der vorliegenden Erfindung ist ein Verfahren zur Herstellung einer erfindungsgemäßen Präparation zum Einfärben von Beton gemäß Anspruch 8 und 9.

Weiterer Gegenstand der vorliegenden Erfindung ist die Verwendung der erfindungsgemäßen Präparation gemäß Anspruch 10 und 11.

Weitere Gegenstände der vorliegenden Erfindung betreffen Verfahren zum Einfärben von hydraulischen Bindemittelsystemen gemäß Anspruch 12.

Wiederum weiterer Gegenstand der vorliegenden Erfindung ist ein hydraulisches Bindemittelsystem gemäß Anspruch 13, welches eine erfindungsgemäße Präparation umfasst.

Schließlich ist Gegenstand der vorliegenden Erfindung ein eingefärbtes Bauteil oder ein eingefärbter Formkörper gemäß Anspruch 14.

Es versteht sich von selbst, dass im folgenden besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies einer ausdrücklichen Erwähnung bedarf.

Bei allen nachstehend genannten relativen bzw. prozentualen, insbesondere gewichtsbezogenen Mengenangaben ist zu beachten, dass diese im Rahmen der vorliegenden Erfindung vom Fachmann derart auszuwählen sind, dass in der Summe - gegebenenfalls unter Einbeziehung weiterer Komponenten bzw. Inhaltsstoffe bzw. Zusatzstoffe bzw. Bestandteile, insbesondere wie nachfolgend definiert - stets 100 % resultieren. Dies versteht sich für den Fachmann aber von selbst.

Im übrigen gilt, dass der Fachmann anwendungsbezogen oder einzelfallbedingt von den nachfolgend aufgeführten Mengenangaben abweichen kann, ohne dass er den Rahmen der vorliegenden Erfindung verlässt.

Gegenstand der vorliegenden Erfindung - gemäß einem **ersten** erfindungsgemäßen Aspekt - ist somit eine Präparation zur Einfärbung von hydraulischen Bindemittelsystemen, insbesondere zementären Systemen, vorzugsweise Beton, wobei die Präparation die folgenden Komponenten umfaßt:
(a) 1 bis 99,999 Gew.-%, bezogen auf die Präparation, mindestens eines anorganischen oberflächenmodifizierten Farbstoffpigments, wobei das anorganische Farbstoffpigment ein Kohlenstoff-Pigment ist,
(b) 0,001 bis 45 Gew.-%, bezogen auf die Präparation, mindestens eines Dispergiermittels,
(c) gegebenenfalls 0,01 bis 20 Gew.-%, bezogen auf die Präparation, mindestens eines Phasenvermittlers,
wobei das Farbstoffpigment einen mittleren Teilchendurchmesser, bestimmt als D₅₀-Wert, im Bereich von 1 bis 1.000 nm aufweist und
wobei das oberflächenmodifizierte Farbstoffpigment mit mindestens einem Modifizierungsmittel umgesetzt ist, wobei das Modifizierungsmittel mindestens ein Alkoxysilan der allgemeinen Formel

R¹ₙ-Si(OR²)ₘ

umfasst, wobei
R¹ einen Alkyl-, Alkenylrest oder Aminoalkylrest mit 1 bis 25 Kohlenstoffatomen darstellt;
R² einen Methyl- oder einen Ethylrest darstellt;
für n gilt: n = 1 oder 2;
für m gilt: m = 4 - n;
wobei die Oberflächenmodifizierung des Farbstoffpigments auf Siliziumdioxid- und/oder Polykieselsäurebasis ausgebildet ist, wobei die siliziumdioxid- und/oder polykieselsäurebasierte Oberflächenmodifizierung Alkylgruppen als hydrophobe Gruppen aufweist und als oberflächenmodifizierende Schicht chemisch und/oder physikalisch an das Farbstoffpigment gebunden ist.

Mit Hilfe dieser Präparation kann eine homogene Einfärbung von hydraulischen Bindemittelsystemen erreicht werden. Dies ist von besonderer Bedeutung, da innerhalb des ausgehärteten hydraulischen Bindemittelsystems vorkommende, leichte Farbnuancen, die durch eine inhomogene Verteilung entstehen können, zu einem sehr unansehnlichen Eindruck des hergestellten zementären Systems führen können.

Verwitterungsversuche der Anmelderin haben dabei zudem gezeigt, dass sich ausgehärtete Betone, der mit den erfindungsgemäßen Präparationen hergestellt wurden, durch eine besonders dauerhafte Farbstabilität, Farbintensität und Farbhomogenität auszeichnen.

Durch chemische bzw. physikalische Modifizierung der Farbstoffpigmentoberflächen ist es erfindungsgemäß gelungen, die nachteiligen Eigenschaften von Pigmenten, nämlich deren unzureichende Verträglichkeit bzw. Kompatibilität mit den üblicherweise verwendeten Komponenten eines zementären Systems, deutlich zu verbessern. Dies wird erfindungsgemäß erreicht, ohne die Farbintensität und Homogenität der Einfärbung zu verschlechtern.

Aufgrund der Oberflächenmodifizierung in Verbindung mit den übrigen Komponenten bzw. Bestandteilen, d. h. dem Dispergiermittel (Dispergator) und dem optionalen Phasenvermittler, wird eine bessere Dispergierbarkeit des Pigments in Betone erzielt, wobei eine intensive und dauerhafte wie homogene Farbkraft erhalten wird.

Bei der erfindungsgemäßen Präparation ist das oberflächenmodifizierte Farbstoffpigment ein Farbstoffpigment mit mindestens einem hieran physikalisch und/oder chemisch gebundenen Modifizierungsmittel. Dabei ist das oberflächenmodifizierte Farbstoffpigment bevorzugt durch Kontaktieren mindestens eines Farbstoffpigments mit mindestens einem Modifizierungsmittel, insbesondere einer Lösung oder Dispersion mindestens eines Modifizierungsmittels, erhältlich.

Bei der erfindungsgemäßen Präparation ist das oberflächenmodifizierte Farbstoffpigment mit mindestens einem Modifizierungsmittel umgesetzt, wobei das Modifizierungsmittel einerseits an das Farbstoffpigment physikalisch und/oder chemisch anzubinden imstande ist und andererseits insbesondere mit dem hydraulischen Bindemittelsystem, insbesondere mit den sogenannten Calciumsilikathydrat-Phasen (CSH-Phasen) des hydraulischen Bindemittelsystems, in Wechselwirkung zu treten, insbesondere zu reagieren oder zu vernetzen, imstande ist.

Bei den CSH-Phasen handelt es sich um vernetzte Phasen in einem hydraulischen Bindemittelsystem, wobei diese Phasen zur Festigkeit im Beton beitragen. Die gemäß dem Stand der Technik hergestellten hydraulischen Bindemittelsysteme, bei denen unbehandelte Ruße eingesetzte werden, umfassen CSH-Phasen, aus denen unbehandelte bzw. nicht oberflächenmodifizierte Pigmente austreten können. Das hat zur Folge, dass diese eingefärbten hydraulischen Bindemittelsysteme verbleichen bzw. an Farbintensität und Farbhomogenität drastisch verlieren.

Gemäß einer besonders bevorzugten Ausführungsform ist das Modifizierungsmittel ein niedermolekulares Modifizierungsmittel. Niedermolekulare Modifizierungsmittel können insbesondere monomere, d. h. nicht durch ein Polymerisierungsverfahren hergestellte Stoffe sein, welche besonders bevorzugt ein Molekulargewicht von 50 bis 5.000 g/mol, bevorzugter von 80 bis 1.000 g/mol, am meisten bevorzugt von 100 bis 500 g/mol, aufweisen können.

Im Rahmen der vorliegenden Erfindung umfasst die erfindungsgemäße Präparation oberflächenmodifizierte Farbstoffpigmente, die mit mindestens einem Modifizierungsmittel umgesetzt sind, wobei das Modifizierungsmittel einerseits unpolare und/oder hydrophobe Gruppen, nämlich Alkylgruppen, und andererseits polare und/oder hydrophile Gruppen, nämlich Alkoxygruppen, vorzugsweise Ethergruppen, aufweist und wobei das Modifizierungsmittel hydrolysierbare Gruppen, insbesondere zur Einarbeitung in das hydraulische Bindemittelsystem, zur Ausbildung von Si-O-Bindungen aufweist.

Das erfindungsgemäß eingesetzte oberflächenmodifizierte Farbstoffpigment, welches zur Einfärbung der hydraulischen Bindemittelsysteme eingesetzt wird, ist im allgemeinen derart beschaffen, dass es infolge seiner Oberflächenmodifizierung eine hohe Affinität bzw. gute Kompatibilität in Bezug auf das einzufärbende hydraulische Bindemittelsystem aufweist. Insbesondere weist das betreffende Modifizierungsmittel einerseits funktionelle Gruppen zu Zwecken der Anbindung, insbesondere der physikalischen und/oder chemischen Anbindung, an das Farbstoffpigment einerseits und hiervon verschiedene funktionelle Gruppen zu Zwecken der Wechselwirkung mit dem einzufärbenden hydraulischen System andererseits auf, wobei letztgenannte Gruppen durch die übrigen Inhaltsstoffe, d. h. den Phasenvermittler und das Dispergiermittel, in Wechselwirkung zu dem hydraulischen Bindemittelsystem treten können. Erfindungsgemäß weist das Modifizierungsmittel Siliciumatome auf, welche über das Siliciumatom gebundene hydrolysierbare Gruppen dann an das einzufärbende hydraulische Bindemittelsystem anzubinden bzw. hiermit in Wechselwirkung zu treten imstande sind.

Erfindungsgemäß ist das in der erfindungsmäßen Präparation verwendete Modifizierungsmittel mindestens ein Silan, nämlich ein Alkoxysilan, vorzugsweise ein Mono-, Di- und/oder Trialkoxysilan (d. h. also insbesondere ein Monoalkoxytrialkylsilan, Dialkoxydialkylsilan und/oder Trialkoxysilan), und ein Alkylsilan.

Im Rahmen der vorliegenden Erfindung wird die Eigenschaft. des Siliciums ausgenutzt, aufgrund seiner chemischen Natur Netzwerke auszubilden. Mit Hilfe des Modifizierungsmittels kann dementsprechend eine physikalische und/oder chemische Anbindung innerhalb der CSH-Phasen des hydraulischen Bindemittelsystems erreicht werden.

Erfindungsgemäß ein Alkoxysilan als Modifizierungsmittel besonders verwendet.

Der Einsatz der vorgenannten Modifizierungsmittel, nämlich von Mono-, Di- und/oder Trialkoxysilanen, welche mit den Pigmenten, insbesondere mit Kohlenstoff (z. B. Ruß), kontaktiert werden, führt im zementären System zur Hydrolyse der Alkoxybindung bzw. -gruppe und zur Ausbildung eines das Pigment umschließenden Netzwerks. Dieses Netzwerk kann man sinngemäß als Verkieselung bezeichnen, da es sich tatsächlich um die Ausbildung von in der Natur vorkommenden tetraedrischen Silicium-Sauerstoff-Netzen bzw. Silicium-Sauerstoff-Netzwerken handelt. Bildlich ausgedrückt, kann das Pigment auf diese Weise eine mono- oder günstigstenfalls oligomere (d. h. einschichtige oder mehrschichtige) Siliziumdioxid- bzw. Sandschicht als Hülle erhalten.

Bedingt durch den oder die hydrophoben Substituenten des Silicium enthaltenden Modifizierungsmittels, d. h. durch den oder die Alkylreste, weist das behandelte, oberflächenmodifizierte Farbstoffpigment eine sozusagen abstoßende Komponente auf, welche einerseits die chemische Vernetzung der oberflächenmodifizierten Pigmentpartikel untereinander verhindert und sich andererseits vorteilhaft auf die Farbintensität auswirkt.

Gemäß einer besonderen Ausführungsform der vorliegenden Erfindung ist die Oberflächenmodifizierung des oberflächenmodifizierten Farbstoffpigments (a) auf Siliziumdioxid- und/oder Polykieselsäurebasis ausgebildet, wobei die siliziumdioxid- und/oder polykieselsäurebasierte Oberflächenmodifizierung hydrophobe Gruppen, nämlich Alkylgruppen, aufweisen kann. Wie zuvor beschrieben, kann dabei die oberflächenmodifizierende Schicht chemisch und/oder physikalisch an das betreffende Farbstoffpigment gebunden sein und dieses Farbstoffpigment bevorzugt, insbesondere in Art einer vorzugsweise kontinuierlichen bzw. kohärenten Umhüllung oder Deckschicht, umgeben.

Ein besonderer Vorteil der vorliegenden Erfindung stellt die universelle sowie homogene und farbintensive sowie dauerhafte, insbesondere verwitterungsbeständige Einfärbbarkeit von hydraulischen Bindemittelsystemen dar.

Im Rahmen der vorliegenden Erfindung umfasst die Präparation ein Kohlenstoff-Pigment als anorganisches Farbstoffpigment, wobei das Kohlenstoff-Pigment insbesondere Ruß umfasst.

Erfindungsgemäß haben die Farbstoffpigmente einen mittleren Teilchendurchmesser, bestimmt als D₅₀-Wert, von 1 bis 1.000 nm, vorzugsweise 2 bis 750 nm, bevorzugt 5 bis 500 nm, besonders bevorzugt 5 bis 400 nm, ganz besonders bevorzugt 10 bis 250 nm.

Die Teilchengröße hat einerseits einen Einfluss auf die Festigkeit des ausgehärteten hydraulischen Bindemittelsystems, andererseits bestimmt die Teilchengröße auch die Farbkraft der Pigmente sowie deren Einarbeitbarkeit bzw. Kompatibilität in Bezug auf die einzufärbenden zementären Systeme bzw. Betone.

Der vorteilhaften Wirkung der Oberflächenmodifizierung der Pigmente als solcher würde jedoch die Tatsache entgegenstehen, dass die hydrophoben Gruppen auf der Pigmentoberfläche dazu führen würden, dass die oberflächenmodifizierten Farbstoffpigmente mit den übrigen Komponenten eines herkömmlichen hydraulischen Bindemittelsystems nicht verträglich sind und sich somit schwer einmischen lassen.

Wie die Anmelderin nun überraschend gefunden hat, bilden ohne zusätzliche Inhaltsstoffe die oberflächenmodifizierten Pigmente lediglich eine feste, insbesondere vernetzte Pigmentschicht an der Oberfläche des hydraulischen Bindemittelsystems aus. Es bedarf daher weiterer Inhaltsstoffe, damit die oberflächenmodifizierten Pigmente mit den übrigen Komponenten eines herkömmlichen hydraulischen Bindemittelsystems verträglich sind.

Überraschenderweise gelingt dies mit den übrigen Bestandteilen der erfindungsgemäßen Präparation, insbesondere der vorgenannten Komponente (b) und der zuvor genannten optionalen, d. h. gegebenenfalls vorhandenen Komponente (c): Daher umfasst die erfindungsgemäße Präparation ferner (b) mindestens ein Dispergiermittel und (c) gegebenenfalls mindestens einen Phasenvermittler.

Ausgehend von der der Erfindung zugrundeliegenden Aufgabe ist es daher erfindungsgemäß überraschenderweise gelungen, die Oberfläche des Farbstoffpigments chemisch bzw. physikalisch derart zu verändern, daß sie als eine andere, besser einbindbare, d. h. verträglichere bzw. kompatiblere Substanz vorliegt. Dies geschieht, indem das (a) oberflächenmodifizierte Farbstoffpigment für die Einfärbung des hydraulischen Bindemittels mit (b) mindestens einem Dispergiermittel und (c) gegebenenfalls mindestens einem Phasenvermittler kombiniert wird, so dass insgesamt ein mit hydraulischen Bindemitteln kompatibles Gesamtsystem in Form der erfindungsgemäßen Präparation vorliegt.

Wie zuvor beschrieben, enthält die erfindungsgemäße Präparation - neben der Komponente (a), d. h. neben dem oberflächenmodifizierten Farbstoffpigment für die Einfärbung des hydraulischen Bindemittels - als weiteren Bestandteil mindestens eine Komponente (b), nämlich mindestens ein Dispergiermittel. Auf diese Weise kann in effizienter Weise insbesondere eine gute Kompatibilität des oberflächenmodifizierten Pigments in Bezug auf die herkömmlichen Inhaltsstoffe hydraulischer Bindemittelsysteme realisiert bzw. eingestellt werden.

Was die Komponente (b) der erfindungsgemäßen Präparation anbelangt, so kann gemäß einer bevorzugten Ausführungsform der erfindungsgemäßen Präparation das Dispergiermittel (b) ein Tensid ein.

Insbesondere kann gemäß dieser Ausführungsform das Dispergiermittel (b) ausgewählt sein aus der Gruppe von Ligninsulfonaten; Naphthalinsulfonsäuren und Naphthalinsulfonsäurederivaten, insbesondere deren Kondensationsprodukten (d. h. Kondensationsprodukten von Naphthalinsulfonsäuren); gegebenenfalls sulfonierte Melaminen und Melaminharzen sowie deren Kondensationsprodukten; gegebenenfalls sulfonierten Naphthalin/Formaldehyd-Kondensationsprodukten; Polysacchariden und Polysaccharidsulfonaten; Phenol/Formaldehyd-Kondensationsprodukten, insbesondere Phenol/FormaldehydHarzen; sowie deren Mischungen.

Erfindungsgemäß variiert die Menge an Dispergiermittel (b) in der erfindungsgemäßen Präparation im Bereich von 0,001 bis 45 Gew.-%, bevorzugt 0,01 bis 40 Gew.-%, insbesondere 0,05 bis 30 Gew.-%, ganz bevorzugt 0,1 bis 20 Gew.-%, noch mehr bevorzugt 0,5 bis 15 Gew.-%, bezogen auf die Präparation.

Insbesondere kann das Mengenverhältnis von oberflächenmodifiziertem Farbstoffpigment (a) zu Dispergiermittel (b) im Bereich von 1000 : 1 bis 1 : 5, insbesondere 500 : 1 bis 1 : 2, vorzugsweise 200 : 1 bis 1 : 1, besonders bevorzugt 100 : 1 bis 2 : 1, variieren.

Wie zuvor beschrieben, kann die erfindungsgemäße Präparation darüber hinaus - d..h. neben den Komponenten (a) und (b) - optional bzw. fakultativ gegebenenfalls eine weitere Komponente (c) in Form eines Phasenvermittlers enthalt. Auf diese Weise kann insbesondere eine modifizierte oder sogar noch verbesserte Kompatibilität des oberflächenmodifizierten Pigments in Bezug auf die herkömmlichen Inhaltsstoffe hydraulischer Bindemittelsysteme realisiert bzw. eingestellt werden, auch wenn die Inkorporierung einer solchen Komponente (c) für die Realisierung bzw. Einstellung der gewünschten Kompatibilität grundsätzlich nicht bzw. nicht zwingend erforderlich ist.

Gemäß einer bevorzugten Ausführungsform der erfindungsgemäßen Präparation kann der Phasenvermittler (c) insbesondere als Emulgator ausgebildet sein. Insbesondere kann der Phasenvermittler beispielsweise mindestens ein Polymer umfassen. Insbesondere kann der Phasenvermittler ausgewählt sein aus der Gruppe von Polyalkoholen, insbesondere Polyvinylalkoholen, insbesondere acetylierten und/oder silanisierten Polyvinylalkoholen, Poly(meth)acrylaten, Polycarboxylimiden bzw. Polycarbonsäureimiden (z. B. Polysuccinimiden), Polycarboxylaten (z. B. Polyaspartaten) und Polycarboxylethern sowie deren Mischungen. Ganz besonders bevorzugt eignen sich Polyvinylalkohole und/oder Polycarboxylether (PCE) als Phasenvermittler, wobei letztere zusätzlich die rheologischen Eigenschaften eines nicht gehärteten hydraulischen Bindemittelsystems verbessern, so dass die Verarbeitbarkeit des betreffenden hydraulischen Bindemittelsystems verbessert wird.

Überraschenderweise hat sich herausgestellt, dass sich als Phasenvermittler insbesondere amphiphile Moleküle, d. h. Moleküle mit hydrophilen und hydrophoben Segmenten, eignen, wobei die hydrophilen Segmente insbesondere polare funktionelle Gruppen aufweisen können, insbesondere OH-Gruppen, und die unpolaren Segmente Ethergruppen aufweisen können. Dabei fungieren die polaren Segmente als Vermittler zu den übrigen Bestandteilen der hydraulischen Bindemittelsysteme, während die unpolaren Segmente eine bessere Verträglichkeit mit den oberflächenmodifizierten Farbstoffpigmenten gewährleisten.

Allgemein können als erfindungsgemäße Phasenvermittler geeignete amphiphile Moleküle jeweils mehrere polare und unpolare Segmente umfassen. Besonders bevorzugt umfasst die erfindungsgemäße Präparation ein α/ω-funktionalisiertes Polymer als amphiphiles Molekül, das in α-Position mit OH-Gruppen funktionalisiert ist und in ω-Position mit Ethergruppen funktionalisiert ist, wobei die Ethergruppe, d. h. OR-Gruppe, eine Alkyl- oder Alkenylgruppe mit 1 bis 16 C-Atomen umfassen kann.

Wenn die erfindungsgemäße Präparation einen Phasenvermittler aufweist, so enthält die erfindungsgemäße Präparation eine Menge an Phasenvermittler (c) im Bereich zwischen 0,01 und 20 Gew.-%, bevorzugt 0,05 bis 15 Gew.-%, insbesondere 0,1 bis 10 Gew.-%, bezogen auf die Präparation.

Insbesondere kann das Mengenverhältnis von oberflächenmodifiziertem Farbstoffpigment (a) zu Phasenvermittler (c) vorzugsweise im Bereich von 1.000 : 1 bis 1 : 2, insbesondere 500 : 1 bis 1 : 1, vorzugsweise 200 : 1 bis 2 : 1, besonders bevorzugt 100 : 1 bis 3 : 1, variieren.

Es versteht sich von selbst, dass die übrigen Komponenten (b) und gegebenenfalls (c) der erfindungsgemäßen Präparation, d. h. das Dispergiermittel (b) und der optionale bzw. fakultative Phasenvermittler (c), so auszuwählen sind, dass sie auch im Hinblick auf die hydraulischen Systeme, in die sie eingearbeitet werden, kompatibel sein sollten.

Vorteilhafterweise kann die erfindungsgemäße Präparation als feste oder flüssige, vorzugsweise homogene Mischung vorliegen. Der Vorteil einer erfindungsgemäßen Präparation, bei der die Komponenten als feste, insbesondere homogene Mischung vorliegen, ist der einer leichteren Handhabung der erfindungsgemäßen Präparation. Auf der anderen Seite lassen sich erfindungsgemäße Präparationen, die als flüssige homogene Mischung vorliegen, einfacher in ein hydraulisches Bindemittelsystem einarbeiten.

Gemäß einer alternativen Ausführungsform kann die erfindungsgemäße Präparation aber auch als sogenanntes Kit vorliegen, d. h. die Komponenten (a) und/oder (b) und/oder gegebenenfalls (c) können getrennt voneinander oder teilweise getrennt voneinander vorliegen, um diese dann erst bei bzw. unmittelbar vor der Einarbeitung der Komponenten der erfindungsgemäßen Präparation in das hydraulische Bindemittelsystem einzuarbeiten. So können die Komponenten jeweils einzeln und/oder in beliebigen Kombinationen von zwei oder mehreren Komponenten als Kit vorliegen, d. h. das Kit kann die Komponenten (a) und/oder (b) und/oder gegebenenfalls (c) zumindest teilweise getrennt voneinander umfassen.

Erfindungsgemäß liegt der Gehalt an oberflächenmodifiziertem Farbstoffpigment in der erfindungsgemäßen Präparation zwischen 1 und 99,999 Gew.-%, bevorzugt zwischen 5 und 90 Gew.-%, noch bevorzugter zwischen 10 und 80 Gew.-% und am meisten bevorzugt zwischen 20 und 70 Gew.-%, bezogen auf die Präparation.

Es hat sich ferner herausgestellt, dass im Fall einer flüssigen erfindungsgemäßen Präparation der Gehalt an oberflächenmodifiziertem Farbstoffpigment in der flüssigen Präparation 1 bis 80 Gew.-%, bevorzugt 10 bis 70 Gew.-%, insbesondere 20 bis 40 Gew.-%, bezogen auf die Präparation, beträgt. Im Fall einer flüssigen erfindungsgemäßen Präparation liegt der Gehalt an Dispergiermittel vorzugsweise im Bereich von 1 bis 20 Gew.-%, vorzugsweise 1 bis 15 Gew.-%, insbesondere 5 bis 10 Gew.-%, bezogen auf die Präparation. Der Rest der Präparation kann gegebenenfalls durch Dispersionsmittel (d. h. flüssige Phase, insbesondere Wasser und/oder gegebenenfalls organische Lösungsmittel) sowie gegebenenfalls weitere Inhaltsstoffe, insbesondere wie nachfolgend definiert, und/oder die Komponente (c) gebildet sein.

Falls die erfindungsgemäße Präparation dagegen als feste Präparation vorliegt, beträgt der Gehalt an oberflächenmodifiziertem Farbstoffpigment in der festen Präparation insbesondere 1 bis 99,999 Gew.-%, bevorzugt 5 bis 90 Gew.-%, insbesondere 10 bis 80 Gew.-%, am meisten bevorzugt 20 bis 70 Gew.-%, bezogen auf die feste Präparation. Im Fall einer festen erfindungsgemäßen Präparation liegt der Gehalt an Dispergiermittel vorzugsweise im Bereich von 0,001 bis 15 Gew.-%, vorzugsweise 1 bis 15 Gew.-%, insbesondere 5 bis 10 Gew.-%, bezogen auf die Präparation. Der Rest kann gegebenenfalls durch weitere Inhaltsstoffe, insbesondere wie nachfolgend definiert, und/oder die Komponente (c) gebildet sein.

Der Rest kann dann jeweils durch Dispergiermittel und optional Phasenvermittler, aber gegebenenfalls auch teilweise durch mindestens einen weiteren Inhaltsstoff, wie z. B. durch mindestens einen anorganischen Füllstoff, insbesondere Gesteinsmehle, Kalksteinmehle, Calciumcarbonat, Bariumsulfat oder dergleichen, gebildet sein.

Neben den vorgenannten Inhaltsstoffen bzw. Komponenten (a) bis (c) kann die erfindungsgemäße Präparation mindestens eine weitere Komponente oder mindestens einen weiteren Inhaltsstoff enthalten, insbesondere ausgewählt aus der Gruppe von Rheologiestellmitteln oder Rheologiemodifikatoren (insbesondere in Mengen von 0,001 bis 5 Gew.-%, vorzugsweise 0,01 bis 2 Gew.-%, insbesondere 0,01 bis 1 Gew.-%, bezogen auf die erfindungsgemäße Präparation); Konservierungsmitteln (insbesondere in Mengen von 0,01 bis 5 Gew.-%, vorzugsweise 0,01 bis 1 Gew.-%, insbesondere 0,05 bis 0,5 Gew.-%, bezogen auf die erfindungsgemäße Präparation); Entschäumern (insbesondere in Mengen von 0,001 bis 2 Gew.-%, vorzugsweise 0,005 bis 1 Gew.-%, insbesondere 0,01 bis 1 Gew.-%, bezogen auf die erfindungsgemäße Präparation); anorganischen bzw. mineralischen Füllstoffen, insbesondere wie zuvor definiert (insbesondere in Mengen von 0,001 bis 80 Gew.-%, vorzugsweise 0,01 bis 50 Gew.-%, insbesondere 0,1 bis 10 Gew.-%, bezogen auf die erfindungsgemäße Präparation); Frostschutzmitteln (insbesondere in Mengen von 0,1 bis 30 Gew.-%, vorzugsweise 1 bis 25 Gew.-%, insbesondere 2 bis 20 Gew.-%, bezogen auf die erfindungsgemäße Präparation); Hydrophobierungsmitteln; Betonzusatzmitteln; sowie deren Kombinationen und/oder Mischungen.

Weiterer Gegenstand der vorliegenden Erfindung - gemäß einem **zweiten** Aspekt der vorliegenden Erfindung - ist ein Verfahren zur Herstellung einer erfindungsgemäßen Präparation zum Einfärben von hydraulischen Bindemittelsystemen, insbesondere zementären Systemen, vorzugsweise Beton, wie zuvor beschrieben, wobei das Verfahren die folgenden Verfahrensschritte umfaßt:
- Kontaktieren mindestens eines zuvor definierten Farbstoffpigments mit mindestens einem zuvor definierten Modifizierungsmittel, insbesondere in Masse oder mit dessen Lösung oder Dispersion, um ein zuvor definiertes oberflächenmodifiziertes Farbstoffpigment zu erhalten; dann
- Kombination, insbesondere Mischen, des auf diese Weise erhaltenen oberflächenmodifizierten Farbstoffpigments, mit mindestens einem Dispergiermittel und gegebenenfalls mit mindestens einem Phasenvermittler, wie jeweils zuvor definiert.

In einer bevorzugten Ausführungsform des erfindungsgemäßen Verfahrens liegt die Menge an einzusetzendem Modifizierungsmittel zwischen 0,01 und 30 Gew.-%, bevorzugt zwischen 0,1 und 25 Gew.-%, noch bevorzugter zwischen 0,2 und 20 Gew.-%, am meisten bevorzugt zwischen 0,5 und 15 Gew.-%, bezogen auf die Menge des zu modifizierenden Farbstoffpigments.

Für weitergehende diesbezügliche Einzelheiten zu diesem Erfindungsaspekt kann Bezug genommen werden auf die obigen Ausführungen zu der erfindungsgemäßen Präparation, welche in Bezug auf das erfindungsgemäße Verfahren entsprechend gelten.

Ein weiterer Aspekt der vorliegenden Erfindung - gemäß einem **dritten** Aspekt der vorliegenden Erfindung - ist die Verwendung der erfindungsgemäßen Präparation zur Einfärbung von hydraulischen Bindemittelsystemen, insbesondere zementären Systemen, vorzugsweise Beton, und/oder die Verwendung der erfindungsgemäßen Präparation zur Herstellung von gefärbtem hydraulischen Bindemittelsystemen, insbesondere zementären Systemen, vorzugsweise Beton.

Gemäß einer bevorzugten Ausführungsform dieses dritten erfindungsgemäßen Aspekts wird die erfindungsgemäße Präparation in einer solchen Menge verwendet, dass die Menge an oberflächenmodifiziertem Farbstoffpigment zwischen 0,01 und 20 Gew.-%, bevorzugt zwischen 0,1 und 15 Gew.-%, am meisten bevorzugt zwischen 2 und 10 Gew.-%, bezogen auf das einzufärbende hydraulische Bindemittelsystem, insbesondere zementäre System, vorzugsweise Beton, im ausgehärteten Zustand, beträgt.

Für weitergehende diesbezügliche Einzelheiten zu diesem Erfindungsaspekt kann Bezug genommen werden auf die obigen Ausführungen zu der erfindungsgemäßen Präparation und den übrigen Erfindungsaspekten, welche in Bezug auf die erfindungsgemäße Verwendung entsprechend gelten.

Weiterer Gegenstand der vorliegenden Erfindung - gemäß einem **vierten** Aspekt der vorliegenden Erfindung - ist ein Verfahren zum Einfärben von hydraulischen Bindemittelsystemen, umfassend das Einmischen einer wie zuvor definierten erfindungsgemäßen Präparation in ein hydraulisches Bindemittelsystem, insbesondere zementäres System, vorzugsweise Beton, gefolgt von einem Abbinde- und/oder Aushärtevorgang.

Für weitergehende diesbezügliche Einzelheiten zu diesem Erfindungsaspekt kann Bezug genommen werden auf die obigen Ausführungen zu der erfindungsgemäßen Präparation und den übrigen Erfindungsaspekten, welche in Bezug auf das erfindungsgemäße Verfahren entsprechend gelten.

Weiterer Gegenstand der vorliegenden Erfindung - gemäß einem **fünften** Aspekt der vorliegenden Erfindung - ist ein Verfahren zum Einfärben von hydraulischen Bindemittelsystemen, umfassend das Einmischen einer erfindungsgemäßen Präparation in ein hydraulisches Bindemittelsystem, insbesondere in ein zementäres System, vorzugsweise Beton, gefolgt von einem Abbinde- und/oder Aushärtevorgang.

Für weitergehende diesbezügliche Einzelheiten zu diesem Erfindungsaspekt kann Bezug genommen werden auf die obigen Ausführungen zu der erfindungsgemäßen Präparation und den übrigen Erfindungsaspekten, welche in Bezug auf das erfindungsgemäße Verfahren entsprechend gelten.

Weiterer Gegenstand der vorliegenden - gemäß einem **sechsten** Aspekt der vorliegenden Erfindung - ist ein hydraulisches Bindemittelsystem, insbesondere ein zementäres System, vorzugsweise Beton, umfassend eine zuvor beschriebene erfindungsgemäße Präparation.

Gemäß einer besonders bevorzugten Ausführungsform dieses erfindungsgemäßen Aspektes liegt das hydraulische Bindemittelsystem im abgebundenen und/oder ausgehärteten Zustand vor.

In einer weiteren erfindungsgemäßen Ausführungsform dieses erfindungsgemäßen Aspektes liegt das hydraulische Bindemittelsystem als abgebundenes und/oder ausgehärtetes System in Form eines Bauteils oder Formkörpers, insbesondere Betonbauteils oder Betonformkörpers, vor.

Für weitere diesbezügliche Einzelheiten zu diesem Erfindungsaspekt kann Bezug genommen werden auf die obigen Ausführungen zu der erfindungsgemäßen Präparation und den übrigen Erfindungsaspekten, welche in Bezug auf diesen erfindungsgemäßen Aspekt entsprechend gelten.

Weiterer Gegenstand der vorliegenden Erfindung - gemäß einem **siebten** erfindungsgemäßen Aspekt - sind eingefärbte Bauteile oder Formkörper, insbesondere Betonbauteile oder Betonformkörper, wie sie erfindungsgemäß durch Verwendung einer erfindungsgemäßen Präparation oder durch das zuvor beschriebene Verfahren zum Einfärben von hydraulischen Bindemittelsystemen erhältlich sind. Beispiele für diese Bauteile oder Formkörper sind Betonwände, Betondecken, Betondächer, Betonpflastersteine, Betondachpfannen und Betondachsteine.

Für weitergehende diesbezügliche Einzelheiten zu diesem Erfindungsaspekt kann Bezug genommen werden auf die obigen Ausführungen zu der erfindungsgemäßen Präparation und den übrigen Erfindungsaspekten, welche in Bezug auf diesen erfindungsgemäßen Aspekt entsprechend gelten.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die vorliegende Erfindung jedoch nicht beschränken.

### Ausführungsbeispiele:

Es werden verschiedene Präparationen zur Einfärbung von hydraulischen Bindemittelsystemen hergestellt, und zwar Vergleichspräparationen einerseits und Präparationen nach der vorliegenden Erfindung andererseits:
Die Vergleichspräparationen umfassen jeweils ein nichtoberflächenmodifiziertes Farbstoffpigment in variablen Mengen zusammen mit einem in der Betonverarbeitung üblichen Dispergiermittel auf Basis von Ligninsulfonaten (z. B. Natriumpolynaphthylmethansulfonat, wie z. B. vom Typ SURFARON® A 1560 N 40 der Firma Synthron, Paris, Frankreich) und/oder einer silanisierten Polyvinylalkohollösung (PVA-Lösung) (Polyviol® 2700 der Wacker Polymer Systems GmbH & Co. KG, Burghausen, Bundesrepublik Deutschland, 18 %ige wässrige Lösung eines silanisierten Polyvinylalkohols) als Phasenvermittler bzw. Emulgator. Die einzelnen Bestandteile der Vergleichspräparationen werden zu einer homogenen Mischung verarbeitet.

Die Präparationen der vorliegenden Erfindung sind vergleichbar zusammengesetzt, umfassen jedoch ein in erfindungsgemäßer Weise oberflächenmodifiziertes Farbstoffpigment in variablen Mengen und daneben gleichermaßen ein in der Betonverarbeitung übliches Dispergiermittel auf Basis von Ligninsulfonaten (z. B. Natriumpolynaphthylmethansulfonat, wie z. B. vom Typ SURFARON® A 1560 N 40 der Firma Synthron, Paris, Frankreich) sowie gegebenenfalls eine silanisierte Polyvinylalkohollösung (Polyviol® 2700 der Wacker Polymer Systems GmbH & Co. KG, Burghausen, Bundesrepublik Deutschland, 18 %ige wässrige Lösung eines silanisierten Polyvinylalkohols) als Phasenvermittler bzw. Emulgator. Die Oberflächenmodifizierung der betreffenden Farbstoffpigmente wird in erfindungsgemäßer Weise mittels eines Monoalkyltrialkoxysilans als Modifizierungsmittel bewirkt, indem eine wässrige Lösung des betreffenden Modifizierungsmittels mit dem betreffenden Farbstoffpigment in Kontakt gebracht und hiermit einwirken gelassen bzw. umgesetzt wird, so dass ein in erfindungsgemäßer Weise oberflächenmodifiziertes Farbstoffpigment resultiert, welches dann nachfolgend mit dem Phasenvermittler (d. h. gegebenenfalls silanisiertes PVA) und dem Dispergiermittel (d. h. Ligninsulfonat) zu einer homogenen Mischung verarbeitet wird.

Die betreffenden Präparationen werden dann in handelsübliche, kommerziell verfügbare Betonmischungen eingemischt bzw. eingearbeitet, welche dann zu Formkörpern (Testkörpern) mit den Abmessungen 12 cm x 5 cm x 2 cm verarbeitet werden.

Nach Abbinden und Aushärtenlassen der Testkörper werden diese visuell hinsichtlich der optischen Qualität ihrer Einfärbung, insbesondere im Hinblick auf die Homogenität und Farbintensität der Einfärbung, bewertet, wobei die Bewertung nach dem Schulnotensystem erfolgt (d. h. Bewertungen von 1 = sehr gut bis 6 = ungenügend).

Nachfolgend werden die einzelnen Testkörper einer Freibewitterung nach DIN EN 12878 unterzogen. Anschließend erfolgt eine visuelle Bewertung im Hinblick auf die Qualität ihrer Einfärbung, insbesondere im Hinblick auf die Homogenität und Farbintensität der Einfärbung, im Vergleich zum Ursprungszustand, wobei die Bewertung auch hier nach dem Schulnotensystem erfolgt.

Die Versuchsergebnisse sind in den nachfolgenden Tabellen (nachstehende Tabellen 1 und 2) zusammengefasst.

Aus den dort referierten Ergebnissen lässt sich ersehen, dass die mit den erfindungsgemäßen Präparationen eingefärbten Testkörper eine deutlich bessere Qualität ihrer Einfärbung bereits im Ursprungszustand aufweisen und darüber hinaus ein deutlich verbessertes Bewitterungsverhalten aufweisen. Mit den erfindungsgemäßen Präparationen gelingt es, hydraulische Bindemittelsysteme, insbesondere auf Betonbasis, in verbesserter Weise, insbesondere mit größerer Homogenität und Farbintensität und zudem mit erhöhter Langzeit- bzw. Bewitterungsbeständigkeit, dauerhaft einzufärben. Die erfindungsgemäßen Präparationen sind zudem universell auf grundsätzlich alle im Bereich von hydraulischen Bindemittelsystemen einsetzbaren Farbstoffpigmente anwendbar bzw. einsetzbar.

**Tabelle 1: Versuchsergebnisse**

| **Präparation Nr.** | **Farbstoffpigment (Größe je < 500 nm)** | **Menge in Gew.-% an Oberflächenmodifizierer vom Typ R¹Si(OR²)₃ (mit R¹ und R² = Methyl oder Ethyl) in Bezug auf Pigment** | **PVA-Menge/Ligninsulfonatmenge in Präparation (Gew.-%/Gew.-%)** | **Optische Bewertung der Qualität der Einfärbung nach Herstellung** | **Optische Bewertung nach Bewitterung** |
|---|---|---|---|---|---|
| 1A | Ruß | 1,0 | 10 / 5 | 1-2 | 2 |
| 1B | Ruß | 5 | 10 / 5 | 1 | 1-2 |
| 1C | Ruß | 10 | 10 / 5 | 1 | 1 |
| 1D | Ruß | 15 | 10 / 5 | 1 | 1 |
| 1E | Eisenoxid | 5 | 10 / 5 | 1-2 | 1-2 |
| 1F | Eisenoxid | 10 | 10 / 5 | 1 | 1 |
| 1G | Eisenoxid | 15 | 10 / 5 | 1 | 1 |
| 1H | Ultramarin | 15 | 10 / 5 | 1 | 1 |
| 1I | Titandioxid | 15 | 10 / 5 | 1 | 1 |
| 1J | Monoazogelb | 12 | 10 / 5 | 1-2 | 1-2 |
| 1K | Phthalocyanin | 10 | 10 / 5 | 1-2 | 1-2 |
| 1L | Chinacridon | 12 | 10 / 5 | 1-2 | 2 |
| 2A | Ruß | - | 10 / 5 | 4 | 4-5 |
| 2B | Ruß | - | 5 / 5 | 4-5 | 5-6 |
| 2C | Ruß | - | 5 / 2 | 4-5 | 5-6 |
| 2D | Ruß | - | 1 / 1 | 5 | 6 |
| 2E | Eisenoxid | - | 10 / 5 | 4-5 | 4-5 |
| 2H | Ultramarin | - | 10 / 5 | 4-5 | 5 |
| 2I | Titandioxid | - | 10 / 5 | 5 | 5-6 |
| 2J | Monoazogelb | - | 10 / 5 | 4-5 | 5-6 |
| 2K | Phthalocyanin | - | 10 / 5 | 4-5 | 6 |
| 2L | Chinacridon | - | 10 / 5 | 4-5 | 6 |
| 2M | Ruß | 10 | 5 / 0 | 3-4 | 4 |
| 2N | Ruß | 10 | 10 / 0 | 2-3 | 3 |
| 2O | Ruß | 10 | 0 / 0 | 4-5 | 5 |

| | | | | | |
|---|---|---|---|---|---|
| Präparationen der Nr. 1A bis 1D.: Erfindungsgemäß Präparationen der Nr. 1E ff.: Nicht erfindungsgemäß | | | | | |

**Tabelle 2: Versuchsergebnisse (Fortsetzung)**

| **Präparation Nr.** | **Farbstoffpigment (Größe je < 500 nm)** | **Menge in Gew.-% an Oberflächenmodifizierer vom Typ R¹Si(OR²)₃ (mit R¹ und R² = Methyl oder Ethyl) in Bezug auf Pigment** | **Ligninsulfonatmenge in Präparation (Gew.-%)** | **Optische Bewertung der Qualität der Einfärbung nach Herstellung** | **Optische Bewertung nach Bewitterung** |
|---|---|---|---|---|---|
| 1M | Ruß | 1 | 1 | 3-4 | 3-4 |
| 1N | Ruß | 5 | 1 | 2-3 | 2-3 |
| 1O | Ruß | 5 | 2,5 | 1-2 | 2 |
| 1P | Ruß | 5 | 5 | 1 | 1-2 |
| 1Q | Ruß | 10 | 7,5 | 1 | 1 |
| 1R | Ruß | 15 | 10 | 1 | 1 |
| 1S | Eisenoxid | 5 | 5 | 1-2 | 1-2 |
| 1T | Eisenoxid | 10 | 5 | 1-2 | 1-2 |
| 1U | Eisenoxid | 15 | 5 | 1-2 | 1-2 |
| 1V | Ultramarin | 15 | 5 | 1-2 | 1-2 |
| 1W | Titandioxid | 15 | 5 | 1-2 | 1-2 |
| 1X | Monoazogelb | 12 | 5 | 1-2 | 2 |
| 1Y | Phthalocyanin | 10 | 5 | 1-2 | 2 |
| 1Z | Chinacridon | 12 | 5 | 1-2 | 2 |
| 2P | Ruß | - | 5 | 5 | 5-6 |
| 2Q | Ruß | - | 7,5 | 5 | 5-6 |
| 2R | Ruß | - | 10 | 5 | 5-6 |
| 2S | Ruß | - | 15 | 5-6 | 6 |
| 2T | Eisenoxid | - | 10 | 4-5 | 4-5 |
| 2U | Ultramarin | - | 10 | 5 | 5 |
| 2V | Titandioxid | - | 10 | 5 | 5-6 |
| 2W | Monoazogelb | - | 10 | 5 | 5-6 |
| 2X | Phthalocyanin | - | 10 | 5-6 | 6 |
| 2Y | Chinacridon | - | 10 | 5-6 | 6 |

| | | | | | |
|---|---|---|---|---|---|
| Präparationen der Nr. 1M bis 1R.: Erfindungsgemäß Präparationen der Nr. 1S ff.: Nicht erfindungsgemäß | | | | | |

## Patentansprüche

1. Präparation zur Einfärbung von hydraulischen Bindemittelsystemen, insbesondere zementären Systemen, vorzugsweise Beton, wobei die Präparation die folgenden Komponenten umfasst:
(a) 1 bis 99,999 Gew.-%, bezogen auf die Präparation, mindestens eines anorganischen oberflächenmodifizierten Farbstoffpigments, wobei das anorganische Farbstoffpigment ein Kohlenstoff-Pigment ist,
(b) 0,001 bis 45 Gew.-%, bezogen auf die Präparation, mindestens eines Dispergiermittels,
(c) gegebenenfalls 0,01 bis 20 Gew.-%, bezogen auf die Präparation, mindestens eines Phasenvermittlers,
wobei das Farbstoffpigment einen mittleren Teilchendurchmesser, bestimmt als D₅₀-Wert, im Bereich von 1 bis 1.000 nm aufweist und
wobei das oberflächenmodifizierte Farbstoffpigment mit mindestens einem Modifizierungsmittel umgesetzt ist, wobei das Modifizierungsmittel mindestens ein Alkoxysilan der allgemeinen Formel
R¹ₙ-Si(OR²)ₘ
umfasst, wobei
R¹ einen Alkyl-, Alkenylrest oder Aminoalkylrest mit 1 bis 25 Kohlenstoffatomen darstellt;
R² einen Methyl- oder einen Ethylrest darstellt;
für n gilt: n = 1 oder 2;
für m gilt: m = 4 - n;
wobei die Oberflächenmodifizierung des Farbstoffpigments auf Siliziumdioxid- und/oder Polykieselsäurebasis ausgebildet ist, wobei die siliziumdioxid- und/oder polykieselsäurebasierte Oberflächenmodifizierung Alkylgruppen als hydrophobe Gruppen aufweist und als oberflächenmodifizierende Schicht chemisch und/oder physikalisch an das Farbstoffpigment gebunden ist.

2. Präparation nach Anspruch 1, **dadurch gekennzeichnet,**
**dass** das anorganische Farbstoffpigment Ruß ist; und/oder
**dass** das Farbstoffpigment einen mittleren Teilchendurchmesser, bestimmt als D₅₀-Wert, im Bereich von 2 bis 750 nm, bevorzugt 5 bis 500 nm, besonders bevorzugt 5 bis 400 nm, ganz besonders bevorzugt 10 bis 250 nm, aufweist.

3. Präparation nach Anspruch 1 oder 2, **dadurch gekennzeichnet,**
**dass** das Dispergiermittel ein Tensid ist und/oder dass das Dispergiermittel ausgewählt ist aus der Gruppe von Ligninsulfonaten; Naphthalinsulfonsäuren und Naphthalinsulfonsäurederivaten, insbesondere deren Kondensationsprodukten; gegebenenfalls sulfonierten Melaminen und Melaminharzen sowie deren Kondensationsprodukten; gegebenenfalls sulfonisierten Naphthalin/Formaldehyd-Kondensationsprodukten; Polysacchariden und Polysaccharidsulfonaten; Phenol/Formaldehyd-Kondensationsprodukten, insbesondere Harzen sowie deren Mischungen; und/oder
**dass** die Menge an Dispergiermittel in der Präparation 0,01 bis 40 Gew.-%, insbesondere 0,05 bis 30 Gew.-%, ganz bevorzugt 0,1 bis 20 Gew.-%, noch mehr bevorzugt 0,5 bis 15 Gew.-%, bezogen auf die Präparation, beträgt; und/oder
**dass** das Mengenverhältnis von oberflächenmodifiziertem Farbstoffpigment zu Dispergiermittel im Bereich von 1.000 : 1 bis 1 : 5, insbesondere 500 : 1 bis 1 : 2, vorzugsweise 200 : 1 bis 1 : 1, besonders bevorzugt 100 : 1 bis 2 : 1, variiert.

4. Präparation nach einem der vorhergehenden Ansprüche, **dadurch gekennzeichnet,**
**dass** der Phasenvermittler als Emulgator ausgebildet ist und/oder dass der Phasenvermittler mindestens ein Polymer umfasst, insbesondere wobei der Phasenvermittler ausgewählt ist aus der Gruppe von Polyalkoholen, insbesondere Polyvinylalkoholen, insbesondere acetylierten und/oder silanisierten Polyvinylalkoholen, Poly(meth)acrylaten, Polycarboxylimiden (Polycarbonsäureimiden), Polycarboxylaten und Polycarboxylethern sowie deren Mischungen; und/oder
**dass** der Phasenvermittler ein amphiphiles Molekül ist und/oder dass der Phasenvermittler sowohl hydrophile als auch hydrophobe Segmente und/oder funktionelle Gruppen aufweist und/oder dass der Phasenvermittler sowohl polare als auch unpolare Segmente und/oder funktionelle Gruppen aufweist; und/oder
**dass** der Phasenvermittler ein α/ω-funktionalisiertes Polymer ist, insbesondere wobei das Polymer in α-Position mit OH-Gruppen funktionalisiert ist und/oder in ω-Position mit Ethergruppen, insbesondere OR-Gruppen, funktionalisiert ist, insbesondere wobei die OR-Gruppe eine Alkyl- oder Alkenylgruppe mit 1 bis 16 C-Atomen umfasst; und/oder dass die Menge an Phasenvermittler in der Präparation 0,05 bis 15 Gew.-%, insbesondere 0,1 bis 10 Gew.-%, bezogen auf die Präparation, beträgt und/oder dass das Mengenverhältnis von oberflächenmodifiziertem Farbstoffpigment zu Phasenvermittler im Bereich von 1.000 : 1 bis 1 : 2, insbesondere 500 : 1 bis 1 : 1, vorzugsweise 200 : 1 bis 2 : 1, besonders bevorzugt 100 : 1 bis 3 : 1, variiert.

5. Präparation nach einem der vorhergehenden Ansprüche, **dadurch gekennzeichnet, dass** die Präparation als feste oder flüssige, insbesondere homogene Mischung vorliegt oder aber dass die Präparation als Kit vorliegt, welches die Komponenten (a) und/oder (b) und/oder (c) zumindest teilweise getrennt voneinander umfasst.

6. Präparation nach einem der vorhergehenden Ansprüche, **dadurch gekennzeichnet, dass** der Gehalt an oberflächenmodifiziertem Farbstoffpigment zwischen 5 und 90 Gew.-%, noch bevorzugter zwischen 10 und 80 Gew.-% und am meisten bevorzugt zwischen 20 und 70 Gew.-%, bezogen auf die Präparation, liegt.

7. Präparation nach einem der vorhergehenden Ansprüche, **dadurch gekennzeichnet, dass** der Gehalt an oberflächenmodifiziertem Farbstoffpigment in der flüssigen Präparation 1 bis 80 Gew.-%, bevorzugt 10 bis 70 Gew.-%, insbesondere 20 bis 40 Gew.-%, bezogen auf die Präparation, beträgt oder dass der Gehalt an oberflächenmodifiziertem Farbstoffpigment in der festen Präparation1 bis 99,999 Gew.-%, bevorzugt 5 bis 90 Gew.-%, insbesondere 10 bis 80 Gew.-%, am meisten bevorzugt 20 bis 70 Gew.-%, bezogen auf die Präparation, beträgt.

8. Verfahren zur Herstellung einer Präparation zum Einfärben von hydraulischen Bindemittelsystemen, insbesondere zementären Systemen, vorzugsweise Beton, gemäß einem der Ansprüche 1 bis 7, wobei das Verfahren die folgenden Verfahrensschritte umfasst:
- Kontaktieren mindestens eines wie zuvor definierten Farbstoffpigments mit mindestens einem wie zuvor definierten Modifizierungsmittel, insbesondere in Masse oder mit dessen Lösung oder Dispersion, um ein wie zuvor definiertes oberflächenmodifiziertes Farbstoffpigment zu erhalten; dann
- Kombination, insbesondere Mischen, des auf diese Weise erhaltenen oberflächenmodifizierten Farbstoffpigments, mit mindestens einem Dispergiermittel und gegebenenfalls mit mindestens einem Phasenvermittler, wie jeweils zuvor definiert.

9. Verfahren nach Anspruch 8, **dadurch gekennzeichnet, dass** die Menge an einzusetzendem Modifizierungsmittel zwischen 0,01 und 30 Gew.-%, bevorzugt zwischen 0,1 und 25 Gew.-%, noch bevorzugter zwischen 0,2 und 20 Gew.-%, am meisten bevorzugt zwischen 0,5 und 15 Gew.-%, bezogen auf die Menge des zu modifizierenden Farbstoffpigments, variiert wird.

10. Verwendung der Präparation nach einem der Ansprüche 1 bis 7 zur Einfärbung von hydraulischen Bindemittelsystemen, insbesondere zementären Systemen, vorzugsweise Beton, und/oder zur Herstellung von gefärbten hydraulischen Bindemittelsystemen, insbesondere zementären Systemen, vorzugsweise Beton.

11. Verwendung nach Anspruch 10, **dadurch gekennzeichnet, dass** die Präparation in einer solchen Menge eingesetzt wird, dass die Menge an oberflächenmodifiziertem Farbstoffpigment zwischen 0,01 und 20 Gew.-%, bevorzugt zwischen 0,1 und 15 Gew.-%, am meisten bevorzugt zwischen 2 und 10 Gew.-%, bezogen auf das einzufärbende hydraulische Bindemittelsystem, insbesondere zementäre System, vorzugsweise Beton, im ausgehärteten Zustand, liegt.

12. Verfahren zum Einfärben von hydraulischen Bindemittelsystemen, umfassend das Einmischen einer Präparation gemäß einem der Ansprüche 1 bis 7 in ein hydraulisches Bindemittelsystem, insbesondere zementäres System, vorzugsweise Beton, gefolgt von einem Abbinde- und/oder Aushärtevorgang.

13. Hydraulisches Bindemittelsystem, insbesondere zementäres System, vorzugsweise Beton, umfassend eine Präparation gemäß einem der Ansprüche 1 bis 7.

14. Eingefärbte Bauteile oder Formkörper, insbesondere Betonbauteile oder Betonformkörper, erhältlich durch die Verwendung gemäß Anspruch 10 oder 11 oder durch ein Verfahren gemäß Anspruch 12.

## Claims

1. A preparation for tinting hydraulic binder systems, particularly cement-based systems, preferably concrete, wherein the preparation comprises the following components:
(a) 1 to 99.999 wt.%, in relation to the preparation, at least of one inorganic surface-modified colour pigment, wherein the inorganic colour pigment is a carbon pigment,
(b) 0.001 to 45 wt.%, in relation to the preparation, of at least of one dispersing agent,
(c) optionally, 0.01 to 20 wt.%, in relation to the preparation, of at least of one phase mediator,
wherein the colour pigment has an average particle diameter, determined as the D₅₀ value, within the range of 1 to 1000 nm, and
wherein the surface-modified colour pigment is reacted with at least one modifier, wherein the modifier comprises at least one alkoxysilane of the general formula
R¹ₙ-Si(OR²)ₘ,
wherein
R¹ represents an alkyl radical, alkenyl radical or aminoalkyl radical with 1 to 25 carbon atoms;
R² represents a methyl radical or ethyl radical;
for n, it applies that: n = 1 or 2;
for m, it applies that: m = 4 - n;
wherein the surface modification of the colour pigment is embodied on a silicon dioxide and/or polysilicic acid basis, wherein the silicon dioxide and polysilicic acid-based surface modification has alkyl groups as hydrophobic groups and is bound chemically and/or physically as a surface-modifying layer to the colour pigment.

2. The preparation according to claim 1, **characterised in that**
the inorganic colour pigment is carbon black; and/or
that the colour pigment has an average particle diameter, determined as the D₅₀ value, within the range of 2 to 750 nm, preferably 5 to 500 nm, particularly preferably 5 to 400 nm, very particularly preferably 10 to 250 nm.

3. The preparation according to claim 1 or 2, **characterised in that**
the dispersing agent is a surfactant and/or that the dispersing agent is selected from the group of lignin sulfonates, naphthalenesulfonic acids and naphthalenesulfonic acid derivatives, particularly their condensation products; optionally sulfonated melamines and melamine resins and their condensation products; optionally sulfonated naphthalene/formaldehyde condensation products; polysaccharides and polysaccharide sulfonates; phenol/formaldehyde condensation products, particularly resins and mixtures thereof; and/or
that the quantity of dispersing agent in the preparation amounts to 0.01 to 40 wt.%, particularly 0.05 to 30 wt.%, preferably 0.1 to 20 wt.%, even more preferably 0.5 to 15 wt.%, in relation to the binder composition; and/or
that the quantity ratio of surface-modified colour pigment to dispersing agent varies within the range of 1000: 1 to 1: 5, in particular 500: 1 to 1: 2, preferably 200: 1 to 1: 1, particularly preferably 100: 1 to 2: 1.

4. The preparation according to one of the preceding claims, **characterised in that**
the phase mediator is embodied as an emulsifier and/or that the phase mediator comprises at least one polymer, particularly wherein the phase mediator is selected from the group of polyalcohols, particularly polyvinyl alcohols, particularly acetylated and/or silanised polyvinyl alcohols, polymethacrylates, polycarboxyl imides (polycarboxylic acid imides), polycarboxylates and polycarboxyl ethers and mixtures thereof; and/or
that the phase mediator is an amphiphilic molecule and/or that the phase mediator has both hydrophilic and hydrophobic segments and/or functional groups and/or that the phase mediator has both polar and non-polar segments and/or functional groups; and/or that the phase mediator is an α/ω-functionalised polymer, particularly wherein the polymer is functionalised in the α-position with OH groups and/or is functionalised in the ω-position with ether groups, particularly OR groups, particularly wherein the OR group comprises an alkyl or alkenyl group with 1 to 16 C atoms; and/or
that the quantity of phase mediator in the preparation amounts to 0.05 to 15 wt.%, particularly 0.1 to 10 wt.%, in relation to the preparation, and/or that the quantity ratio of surface-modified colour pigment to phase mediator varies within the range of 1000: 1 to 1: 2, in particular 500: 1 to 1: 1, preferably 200: 1 to 2: 1, particularly preferably 100: 1 to 3: 1.

5. The preparation according to one of the preceding claims, **characterised in that** the preparation exists as a solid or liquid, in particular homogenous mixture or that the preparation exists as a kit, which comprises the components (a) and/or (b) and/or (c) at least partially separated from one another.

6. The preparation according to one of the preceding claims, **characterised in that** the content of surface-modified colour pigment is between 5 and 90 wt.%, more preferably between 10 and 80 wt.% and most preferably between 20 and 70 wt.%, in relation to the preparation.

7. The preparation according to one of the preceding claims, **characterised in that** the content of surface-modified colour pigment in the liquid preparation is 1 to 80 wt.%, preferably 10 to 70 wt.%, particularly 20 to 40 wt.%, in relation to the preparation, or that the content of surface-modified colour pigment in the solid preparation is 1 to 99.999 wt.%, preferably 5 to 90 wt.%, particularly 10 to 80 wt.%, most preferably 20 to 70 wt.%, in relation to the preparation.

8. The method for the production of a preparation for tinting hydraulic binder systems, particularly cement-based systems, preferably concrete, according to one of claims 1 to 7, wherein the method comprises the following method steps:
- bringing into contact at least one colour pigment as previously defined with at least one modifier as previously defined, particularly in bulk or with the solution or dispersion thereof, in order to obtain a surface-modified colour pigment as previously defined; then
- combining, particularly mixing, the surface-modified colour pigment obtained in this way, with at least one dispersing agent and optionally with at least one phase mediator, each as previously defined.

9. The method according to claim 8, **characterised in that** the quantity of modifier to be used is varied between 0.01 and 30 wt.%, preferably between 0.1 and 25 wt.%, more preferably between 0.2 and 20 wt.%, most preferably between 0.5 and 15 wt.%, in relation to the quantity of colour pigment to be modified.

10. A use of the preparation according to one of claims 1 to 7 for tinting hydraulic binder systems, particularly cement-based systems, preferably concrete, and/or for the production of dyed hydraulic binder systems, particularly cement-based systems, preferably concrete.

11. The use according to claim 10, **characterised in that** the preparation is used in such a quantity that the quantity of surface-modified colour pigment is between 0.01 and 20 wt.%, preferably between 0.1 and 15 wt.%, most preferably between 2 and 10 wt.%, in relation to the hydraulic binder system to be coloured, particularly the cement-based system, preferably concrete, in the hardened state.

12. A method for tinting hydraulic binder systems, comprising the mixing of a preparation according to one of claims 1 to 7 in a hydraulic binder system, particularly a cement-based system, preferably concrete, followed by a bonding and/or hardening process.

13. A hydraulic binder system, particularly a cement-based system, preferably concrete, comprising a preparation according to one of claims 1 to 7.

14. Tinted components or moulded bodies, particularly concrete components or concrete moulded bodies, obtainable through the use according to claim 10 or 11 or through the method according to claim 12.

## Revendications

1. Préparation destinée à colorer des systèmes de liants hydrauliques, en particulier des systèmes cimentaires, de préférence du béton, la préparation comprenant les composants suivants :
(a) 1 à 99,999 % en poids, rapporté à la préparation, d'au moins un pigment colorant inorganique, à surface modifiée, le pigment colorant inorganique étant un pigment de carbone,
(b) 0,001 à 45 % en poids, rapporté à la préparation, d'au moins un agent dispersant,
(c) éventuellement 0,01 à 20 % en poids, rapporté à la préparation, d'au moins un agent de compatibilitié,
le pigment colorant présentant un diamètre particulaire moyen, défini comme valeur D₅₀, dans la plage comprise entre 1 et 1000 nm, et
le pigment colorant à surface modifiée étant mis à réagir avec au moins un agent de modification, l'agent de modification comprenant au moins un alcoxysilane de la formule générale
R¹ₙ-Si(OR²)ₘ
R¹ représentant un radical alkyle, alcényle ou un radical aminoalkyle ayant 1 à 25 atomes de carbone ;
R² représentant un radical méthyle ou éthyle ;
pour n, on a : n = 1 ou 2 ;
pour m, on a : m = 4 - n ;
la modification de surface du pigment colorant étant réalisée à base de dioxyde de silicium et/ou d'acide polysilicique, la modification de surface à base de dioxyde de silicium et/ou d'acide polysilicique présentant des groupes alkyl en tant que groupes hydrophobes et étant reliée chimiquement et/ou physiquement au pigment colorant en tant que couche modifiant la surface.

2. Préparation selon la revendication 1, **caractérisée**
**en ce que** le pigment colorant inorganique est de la suie ; et/ou en ce que le pigment colorant présente un diamètre particulaire moyen, défini comme valeur D₅₀, dans la plage comprise entre 2 et 750 nm, de préférence entre 5 et 500 nm, de préférence encore 5 à 400 nm, mieux encore entre 10 et 250 nm.

3. Préparation selon la revendication 1 ou 2, **caractérisée**
**en ce que** l'agent dispersant est un tensioactif et/ou en ce que l'agent dispersant est sélectionné dans le groupe des lignosulfonates ; des acides naphtalènesulfoniques et des dérivés d'acide naphtalènesulfonique, en particulier leurs produits de condensation ; des mélamines et des résines de mélamine éventuellement sulfonées ainsi que leurs produits de condensation ; des produits de condensation naphtalène/formaldéhyde éventuellement sulfonés ; des polysaccharides et des polysaccharidesulfonates ; des produits de condensation phénol/formaldéhyde, en particulier des résines ainsi que leurs mélanges ; et/ou
**en ce que** la quantité d'agent dispersant dans la préparation s'élève entre 0,01 et 40 % en poids, en particulier entre 0,05 et 30 % en poids, mieux encore entre 0,1 et 20 % en poids, idéalement entre 0,5 et 15 % en poids, rapporté à la préparation ; et/ou en ce que le rapport pondéral du pigment colorant à surface modifié à l'agent dispersant varie dans la plage de 1000 : 1 à 1 : 5, en particulier 500 : 1 à 1 : 2, de préférence 200 : 1 à 1 : 1, préférablement 100 : 1 à 2 : 1.

4. Préparation selon une des revendications précédentes, **caractérisée en ce que**
l'agent de compatibilité se présente sous la forme d'émulsifiant et/ou **en ce que** l'agent de compatibilité comprend au moins un polymère, en particulier l'agent de compatibilité étant sélectionné dans le groupe de polyalcools, en particulier des alcools polyvinyliques, en particulier des alcools polyvinyliques silanés et/ou acétylés, des poly(méth)acrylates, des imides polycarboximides (imides d'acides polycarboxyliques), des polycarboxylates et des éthers polycarboxyliques et leurs mélanges ; et/ou
**en ce que** l'agent de compatibilité est une molécule amphiphile et/ou **en ce que** l'agent de compatibilité présente des segments tant hydrophiles qu'hydrophobes et/ou des groupes fonctionnels et/ou **en ce que** l'agent de compatibilité présente des segments tant polaires qu'apolaires et/ou des groupes fonctionnels ; et/ou
**en ce que** l'agent de compatibilité est un polymère α/ω-fonctionnalisé, en particulier le polymère est fonctionnalisé sur la position α par des groupes OH et/ou sur la position ω par des groupes éther, en particulier des groupes OR, en particulier le groupe OR comprenant un groupe alkyle ou alcényle ayant 1 à 16 atomes C ; et/ou
**en ce que** la quantité d'agent de compatibilité dans la préparation s'élève entre 0,05 et 15 % en poids, en particulier entre 0,1 et 10 % en poids, rapporté à la préparation, et/ou en ce que le rapport pondéral du pigment colorant à surface modifiée à l'agent de compatibilité varie dans la plage de 1000 : 1 à 1 : 2, en particulier 500 : 1 à 1 : 1, de préférence 200 : 1 à 2 : 1, préférablement 100 : 1 à 3 : 1.

5. Préparation selon une des revendications précédentes, **caractérisée en ce que** la préparation se présente sous la forme d'un mélange liquide ou solide en particulier homogène ou **en ce que** la préparation se présente sous forme d'un kit, qui comprend les composants (a) et/ou (b) et/ou (c) au moins partiellement séparés les uns des autres.

6. Préparation selon une des revendications précédentes, **caractérisée en ce que** la teneur en pigment colorant à surface modifiée se situe entre 5 et 90 % en poids, de préférence encore entre 10 et 80 % en poids et idéalement entre 20 et 70 % en poids, rapporté à la préparation.

7. Préparation selon une des revendications précédentes, **caractérisée en ce que** la teneur en pigment colorant à surface modifiée de la préparation liquide s'élève entre 1 et 80 % en poids, de préférence entre 10 et 70 % en poids, en particulier entre 20 et 40 % en poids, rapporté à la préparation, ou **en ce que** la teneur en pigment colorant à surface modifiée de la préparation solide s'élève entre 1 et 99,999 % en poids, de préférence entre 5 et 90 % en poids, en particulier entre 10 et 80 % en poids, idéalement entre 20 et 70 % en poids, rapporté à la préparation.

8. Procédé de fabrication d'une préparation destiné à colorer des systèmes de liants hydrauliques, en particulier des systèmes cimentaires, de préférence du béton, selon l'une des revendications 1 à 7, le procédé comprenant les étapes de procédé suivantes :
- mise en contact d'au moins un pigment colorant tel que défini précédemment et d'au moins un agent de modification tel que défini précédemment, en particulier sans solvant ou d'une solution ou dispersion de celui-ci pour obtenir un pigment colorant à surface modifiée tel que défini précédemment ; ensuite
- combinaison, en particulier mélange, du pigment colorant à surface modifiée obtenu de cette manière, avec au moins un agent dispersant et éventuellement avec au moins un agent de compatibilité, comme respectivement défini précédemment.

9. Procédé selon la revendication 8, caractérisé en ce la quantité d'agent de modification à utiliser varie entre 0,01 et 30 % en poids, de préférence entre 0,1 et 25 % en poids, de préférence encore entre 0,2 et 20 % en poids, idéalement entre 0,5 et 15 % en poids, rapporté à la quantité de pigment colorant à modifier.

10. Utilisation de la préparation selon l'une quelconque des revendications 1 à 7, destinée à colorer dans la masse des systèmes de liants hydrauliques, en particulier des systèmes cimentaires, de préférence du béton, et/ou destinée à la fabrication de systèmes de liants hydrauliques colorés, en particulier des systèmes cimentaires, de préférence du béton.

11. Utilisation selon la revendication 10, **caractérisée en ce que** la préparation est utilisée dans une quantité telle que la quantité de pigment colorant à surface modifiée se situe entre 0,01 et 20 % en poids, de préférence entre 0,1 et 15 % en poids, idéalement entre 2 et 10 % en poids, rapporté au système de liant hydraulique à colorer, en particulier au système cimentaire, de préférence au béton, à l'état durci.

12. Procédé destiné à colorer dans la masse des systèmes de liants hydrauliques, comprenant le mélange d'une préparation selon l'une des revendications 1 à 7 dans un système de liant hydraulique, en particulier un système cimentaire, de préférence du béton, suivi par un processus de prise et/ou de durcissement.

13. Système de liant hydraulique, en particulier système cimentaire, de préférence du béton, comprenant une préparation selon l'une des revendications 1 à 7.

14. Éléments de construction ou corps moulés colorés dans la masse, en particulier éléments de construction en béton ou corps moulés en béton, pouvant être obtenus par l'utilisation selon la revendication 10 ou 11 ou selon un procédé selon la revendication 12.
